# EUROPEAN PATENT APPLICATION

(11) **EP 3 309 502 A1**
(43) Date of publication of application: **18.04.2018**
(21) Application number: 17466013.4
(22) Date of filing: 12.10.2017
(51) Int. Cl.: G01B 7/34, G01B 7/28, G01B 7/287

(54) **DEVICE FOR CHECKING THE ACCURACY OF ROD MATERIALS**

(30) Priority: 14.10.2016 CZ 20160647
(71) Applicant: Vojtechhouse s.r.o., 54901 Nové Mesto nad Metují - Krcin (CZ)
(72) Inventor: Vojtech, Lukás, 54907 Nahorany (CZ)
(74) Representative: Skoda, Milan

(57) **Abstract**

A device for checking the accuracy of rod materials, in particular a device for checking the accuracy of half-finished rod materials, especially for checking the flatness and/or pitch and/or straightness and/or cylindricalness and/of the rod materials in round form and/or profiles and/or tubes with a circular cross-section or a cross-section having a nearly circular cross-section such as multiple angle profiles, which comprises at least one measuring grid (1) and at least one measuring device (2) for forming tolerance planes (3).

**List of Reference Marks**

1
measuring grid
2
measuring device
3
tolerance plane
4
line sensor
5
rod material
6
point sensor
7
line
8
height-adjustable carrier
9
drive means
10
sensor
11
measuring area
12
glider
13
sorting means
14
stack of bar material falling within tolerance
15
stack of bar material not falling within tolerance
16
container
17
control positions
18
safety mechanism
19
cart
20
container of rod material
21
signalling means
22
measuring plane
23
contact field of the measuring device
24
level above the tolerance plane
25
edge of the rod material I
26
edge of rod material II

## Description

### Technical Field

The invention relates to a device for checking the accuracy of rod materials, specifically a device for checking the accuracy of semifinished rod materials.

### State of the Art

Mass and above all automated engineering production using CAD / CAM technology puts pressure on minimising the price of the input material used as well as pressure on short production times. This brings new technological challenges and new requirements, especially for long-running automata, where the efficiency of production and automation is maximised. In most cases, the efficiency of production is due not only to optimised cutting conditions using tools, but also to their cooling carried out by components, the technological process of production, but mostly to the maximum useable rotations, especially for the spindles. These operating rotations ideally correspond to the maximum permissible rotations of the machine but, this is limited by vibrations caused by the rotation of the workpiece. The resulting vibrations have a negative impact on machine wear, operational safety and the accuracy and consistency of required dimensions of the manufactured products and with this, the related repeatability of production.

Currently in production either calibrated rod materials with guaranteed flatness are used and with this a high price or, vibration is reduced by shortening the input rods. By reducing the material mass being rotated its vibration is also reduced. The shortening of the rods, however, leads not only to an increase in raw material waste, but also to an increase in the requirements for material handling and preparation.

It should also be noted that although manufacturers and suppliers of rod materials guarantee an agreed level of tolerance for flatness and / or pitch, it is very complicated to check this and it is difficult to make claims on pre-worked materials.

However, if non-even rods are inserted into a working machine and subsequently produced from it, damage and shortening of spindle life in particular results, due to high pitch and subsequent vibrations, and gradually to a change the reference dimensions and parameters set on the machine - i.e. its calibration. As experience shows, in production using "bent" rods, it is necessary to reduce rotation speed so that the machine does not exceed prescribed limits and, due to high stress, does not rip out of its anchoring elements.

All of the above problems fundamentally limit not only the maximum overall efficiency of production, but also reduce the service life of the working machine and with this fundamentally reduced service and general overhaul intervals.

The measurement of the tolerance of geometric shapes of longitudinal materials has so far used conservative methods. Measurements are carried out using standard plates, workshop control rulers, knife rulers or deviation gauges, these also including a measuring table or bench. To measure deviations from reference plates or profiles, either mechanical or electronic contact sensor devices are used.

Known measuring methods are designed especially for laboratory or control procedures and are not considered for checking all pieces or continuous checking. The main disadvantage of these methods is the high time requirements for measurement, the cost of preparation and measuring instruments, the need to measure cleaned materials, and that due to the necessity of contact with the measuring instruments. An unavoidable prerequisite is the required qualification and responsibility of the control staff.

Among other control options include various optical methods where 3D cameras are used for image recognition or comparison of measured pieces with norms or interferometric methods. Even these optical methods are by their nature unsuitable for continuous operational measurement in the workshop, particularly for dirty materials. Dirt causes both wear and tear on the measuring instrument and affects the accuracy of the methods as well.

From patent document CS 171613, a device is known for detecting the pitch of the rotating bodies, characterised by that on the work table a sliding base plate is mounted in a single orthogonal direction in which cavities containing compression springs and friction pins and a groove for a radial guide pin extending through the slider provided with adjustable screw contacts, the base plate containing a pin around which a lever is rotatably mounted, provided at one end of its arm with a contact hammer arm and the other end of the lever being provided with a copying pulley with the lever between the pin and the contact hammer being provided with a spring fastened to the base plate catch. The disadvantage of this device is its relative complexity and also that it is not usable for productive and rapid checking of the rotating bodies.

It is evident from the above-mentioned current technology that there are a number of disadvantages to existing control devices described above.

The object of the invention is to provide a device for checking the accuracy of rod materials which will allow for simple, highly productive checking, undemanding of personnel.

### Principle of the Invention

The above-mentioned drawbacks are largely eliminated, and the objectives of the invention are fulfilled by a device for checking the accuracy of rod materials, in particular a device for checking the accuracy of half-finished rod products, especially for checking the flatness and/or pitch and/or straightness and/or cylindricalness of the rod materials in round form and/or profiles and/or tubes with a circular cross-section or a cross-section having a nearly circular cross-section such as multiple angle profiles according to the invention, whose basis comprises a measuring grid and at least one measuring device for forming a tolerance plane. This design solution allows for the detection of exceeded distance corresponding to the tolerance of given parameters represented by the tolerance plane. The measuring device can be set to measure exceeded tolerance, therefore by that above the measuring plane, which is the plane formed by the surface of the grid which is taken to be zero tolerance, and that below the measuring plane. The device simply evaluates the presence or absence of the nearest edge of the tested rod material, while it is rolling along its entire circumference across the measuring grid, making at least one revolution. An advantage is that the device, according to the invention, provides for automated control of the tolerance of the flatness and the pitch of the rod material. This allows quality control to be carried out before the rod is put into production, which makes it possible to use the entire production length of the material responsibly, and at the same time setting the technological parameters with high working rotation speeds and so for maximum production productivity.

In the first advantageous embodiment, the measuring device for forming a tolerance plane is at least one linear sensor arranged longitudinally in the direction of movement of the rod material along the measuring grid. This design solution is very simple and practically easy to use.

In the second advantageous embodiment, the measuring device for forming a tolerance plane is at least one linear sensor arranged obliquely to the direction of movement of the rod material along the measuring grid. Preferably, at least two linear sensors are oriented in the rolling direction below a predetermined angle, their spacing being adjusted in such a way that the field of sensors, when viewed perpendicular to the tolerance plane due to rolling, covers the entire length of the controlled material.

In the third advantageous embodiment, the measuring device for forming a tolerance plane is at least three point sensors arranged in at least one line parallel to the measuring grid. The advantage is once again simplicity, which in most cases is sufficient to achieve high quality control results.

To advantage, the measuring device for forming a tolerance plane is at least four point sensors arranged in at least two lines parallel to the measuring grid, these lines being simultaneously mutually arranged longitudinally in the direction of movement of the rod material along the measuring grid. The advantage of this variant is the possibility to achieve higher precision.

To check the accuracy of rod materials made of electrically conductive materials, the measuring device is to greatest advantage an inductive sensor.

To check the accuracy of rod materials made of electrically non-conductive materials, the measuring device is to greatest advantage an electrostatic transducer or high-frequency electromagnetic sensor.

The use of a linear arrangement of the inductive sensors, namely, flowing current sensors, is intended for checking electrically conductive materials (eg. steel, stainless steel, brass, etc.) where the distance between the sensor and the controlled material is affected by the electrical impedance of the sensor, which is further evaluated. In the case of checking non-conductive materials (eg. plastics, composite rods), it is advantageous to implement linear sensors while using the principles of measuring permeability changes, be they either electrostatic or electromagnetic principles.

Furthermore, it is to advantage that at least one measuring device for forming a tolerance plane is arranged on a fixed height-adjustable carrier which is advantageously adjustable stepwise or continuously with respect to the size of the tolerance field of the rod material being measured.

It is also to great advantage if the height-adjustable carrier is connected to the drive means.

From a practical point of view, in the most advantageous embodiment, the measuring grid is arranged on an incline with respect to the horizontal plane. This makes it easy to move the rod material being measured along the measuring grid without special additional drive.

If the device for checking the accuracy of rod materials does not include a measuring grid inclined with respect to the horizontal plane, it is to advantage to include a means of transporting the rod material along the measuring grid. Furthermore, this embodiment is advantageous for achieving movement of rod materials with a non-circular cross-section.

It is also to advantage if the device further comprises at least two sensors to demarcate the measuring area.

In order to protect rod materials from damage, it is to advantage if the grid is equipped with gliders. It to advantage if the gliders are treated on all places along which the rod materials move.

From the perspective of overall simplicity and functionality of design, it is to advantage if a sorting means is arranged beyond the measuring grate from which rod material within tolerance falls into one container and non-tolerance rod materials into another.

The main advantage of the rod material checking device according to the invention is that it allows for fast, simple and thus highly productive and efficient control.

In experiments performed during verification of the feasibility of the invention, it was found that if the programmed machine required a manufacturing time of the turned piece of 35 seconds, after inserting a control rod with a length of 3 meters and a flatness better than 1 mm, it was possible to adjust cutting conditions to the maximum values managed by the slicing too. By increasing the cutting speed, production time was shortened to 24 seconds. All this made it possible to optimise the production technology provided that the correct technological parameters were set, especially with emphasis on the low wear to the machine, which would otherwise have resulted in bent rods due to vibration.

It is also to advantage that checking of the input material, that is to say poles, does not take a long time and can be carried out in technological intervals or with the use of low-qualified staff. In an advantageous embodiment, the entire process can be automated, the rods from the container being transferred through a cleaning unit and by a manipulator moved into a material hopper and then by a feeder at the working machine.

Time and material savings found during experimental runs show that this is a major innovation with high added value and a significant increase in production efficiency. In trial runs, an increase in production efficiency during continuous operation of about 33,000 units per month was found. Thus, investment is not very high and return is in a matter of months, using three CNC long-running automata at one operation. In addition, the sorting machine can be shared between multiple workplaces, not only with CNC machine tools. Maximum efficiency can be achieved when the machine is used during initial inspection of materials at the factory, during the material pick-up process, or in the case of a working machine, if the material has lain for a long time or is improperly stored.

It follows from the above that a further great advantage is the increase in production efficiency and extended the life of the machines, thanks to the timely checking of the materials being processed.

### Overview of the Figures

The invention will be explained in more detail using drawings, in which Fig. 1 and Fig. 2 show, in a side and front schematic view, equipment arranged with an input storage container and containers with rod materials either falling within tolerance or rod materials falling into non-tolerance stacked upon each other ,Fig. 3 shows a side schematic view, of a simplified version of the equipment with one container and an indicating signal whether or not the rod materials fall within the tolerance, Fig. 4 shows a side schematic view of the simplest version of the equipment without a container and an indicating signal whether or not the rod materials fall within the tolerance, Fig. 5 shows a schematic top view of an arrangement of a measuring device comprised of six linear sensors arranged longitudinally in the direction of movement of the rod material along the measuring grid; Fig. 6 shows, in a top schematic view, the arrangement of a measuring device which is four line sensors arranged obliquely to the direction of movement of the rod material along the measuring grid, Fig. 7 shows in a top schematic view, the arrangement of a measuring device consisting of seven point sensors arranged in a line perpendicular to the direction of movement of the rod material along the measuring grid Fig. 8 shows a top schematic view of the arrangement of a measuring device, which are twelve point sensors arranged in two lines perpendicular to the direction of movement of the rod material along the measuring grid, and Fig. 9 shows schematically the evaluation of the presence of the rod material in the tolerance field.

### Examples of the Performance of the Invention

### Example 1

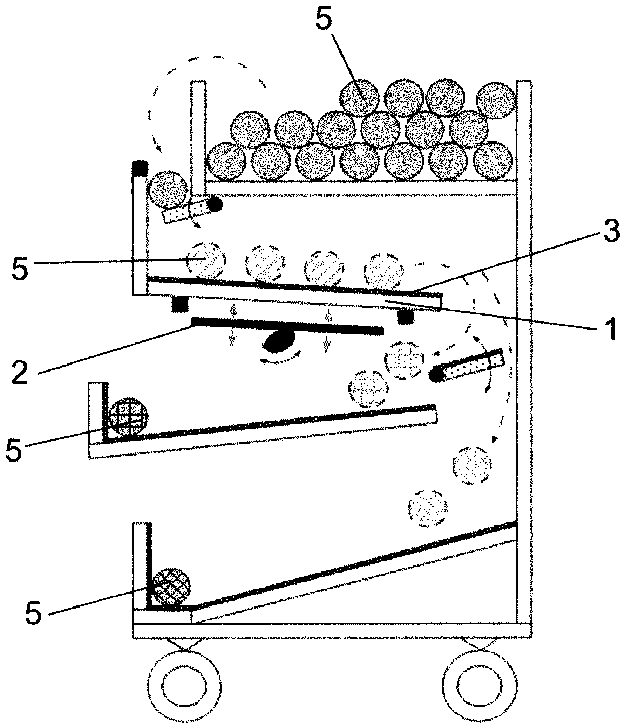

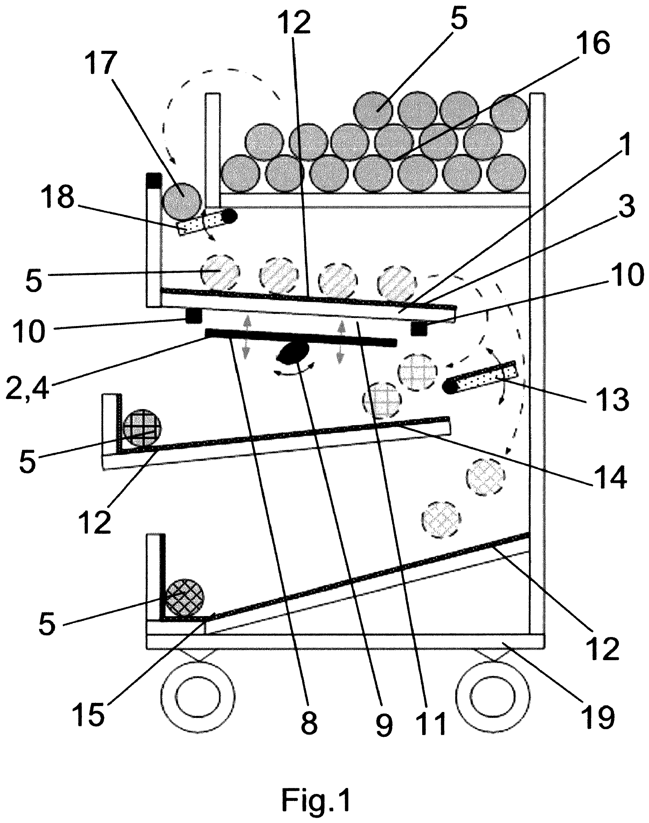

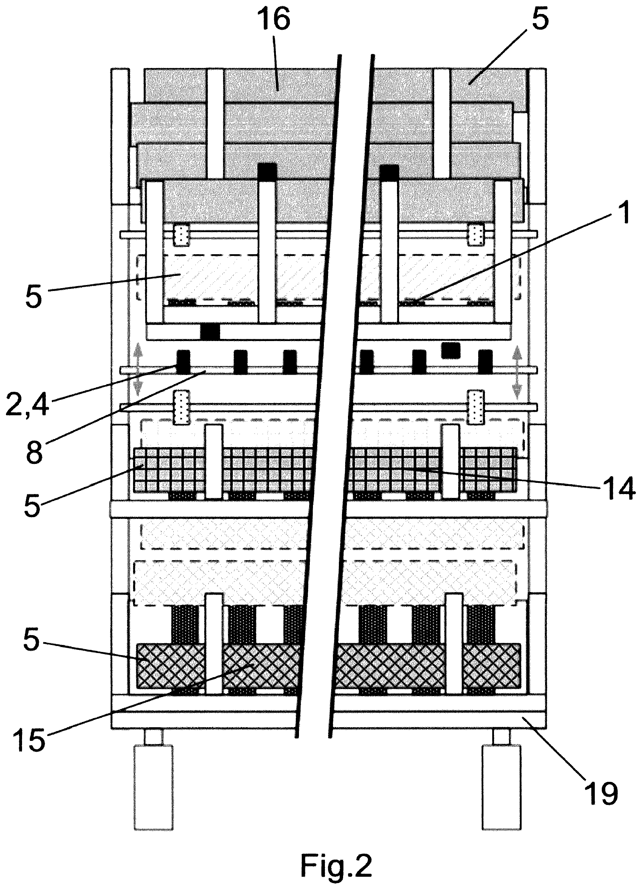

A device for checking the accuracy of semifinished rod materials (Fig.1, Fig.2) made with the cart 19 to be mobile.

The device allows for control of the flatness and/or pitch and/or the straightness and/or the cylindricalness and/or the cohesiveness of rod materials, in particular rod materials in round form and/or profiles and/or tubes with a circular cross-section or a cross-section having a nearly circular cross-section such as multiple angle profiles.

The device comprises a measuring grid 1 and a range of measuring devices 2 to form a tolerance plane 3.

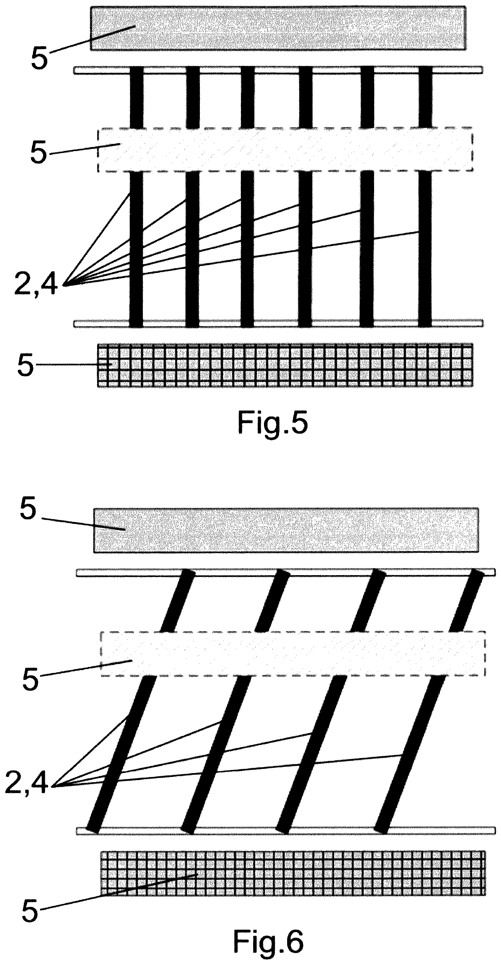

By means of measuring devices 2 to form a tolerance plane 3, there is a range of line sensors 4 (Fig. 5) arranged longitudinally in the direction of movement of the rod material 5 along the measuring grid 1.

By means of measuring devices 2 to form a tolerance plane 3, there is a range of line sensors 4 (Fig. 6) which may in variation, be arranged obliquely to the direction of movement of the rod material 5 along the measuring grid 1.

In other variants, the measuring devices 2 for forming the tolerance plane 3 may be one linear sensor 4 arranged longitudinally or obliquely to the direction of movement of the rod material along the measuring grid 1.

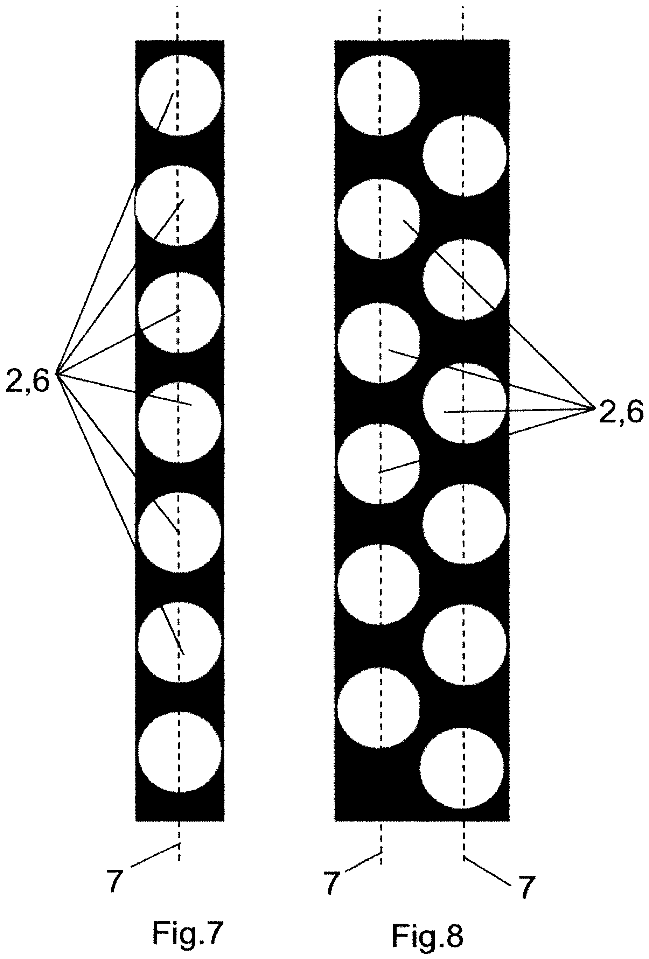

In another possible variant, the measuring means 2 may form a tolerance plane 3 with a point sensor 6 arranged in a single line 7 parallel to the measuring grid 1. In a single line 7, three point sensors 6 may be arranged. To advantage is the arrangement of seven point sensors 6 in one line 7 (Fig. 7).

In another possible variant, the measuring means 2 may form a tolerance plane 3 with four point sensors 6 arranged in two lines 7 parallel to the measuring grid 1, these lines being simultaneously arranged one after the other in the direction of movement of the rod material 5 along the measuring grid 1. To advantage is the arrangement of twelve point sensors 6 in two lines 7 (Fig. 8).

The measuring device 2 for checking electrically conductive materials is an inductive sensor.

The measuring device 2 for checking electrically nonconductive materials is an electrostatic transducer or an electromagnetic transducer.

The measuring devices 2 for forming tolerance planes 3 are arranged on a fixed height-adjustable carrier 8 which is connected to the drive means 9, which is eccentric.

The measuring grid 1 is arranged as inclined with respect to the horizontal plane.

Alternatively, if the measuring grid 1 is arranged horizontally or if the rod material 5 being measured has a non-circular cross-section, the device also comprises a transport means (not shown) to move the rod material 5 along the measuring grid 1.

The device further comprises two sensors 10 for demarcation of the measuring area 11.

The measuring grid 1 is equipped with gliders 12. The gliders 12 are provided on all grids upon which the measured rod material 5 moves.

Beyond the measuring grid 1 there is additionally located a sorting means 13 into whose container 14 the tolerance bar material 5 falls and the container 15 into which the non-tolerance bar material 5 falls.

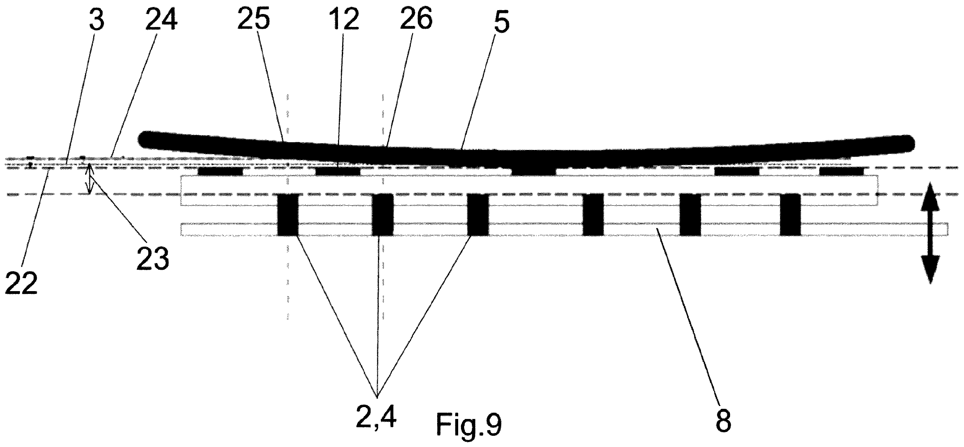

The measuring device 2 can be adjusted to measure exceeded tolerance (Fig. 9), ie exceeding the tolerance plane 3 above the measuring plane 22, which is the plane formed by the surface of the measuring grid 1, which is taken to be the zero tolerance plane, as well as below the measuring plane 22.

If the tolerance plane 3 is set (Fig. 9) above the measuring plane 22 and the proximal edge 26 of the rod material 5 being tested is at or below the tolerance plane 3, it is in the contact field 23 of the measuring device 2, the rod material 5 is evaluated as tolerated, and on the basis of this information it is allowed into the tolerance bar container 14. If the proximal edge 25 of the rod material 5 being tested is at a level 24 above the tolerance plane 3, it is outside the contact field 23 of the measuring device 2, and the rod material 5 is evaluated as being out of tolerance and, on the basis of this information, is released into the non- tolerance container 15.

If, according to the variation not shown, the tolerance plane 3 is set below the measuring plane 22, and if the proximal edge of the rod material 5 being tested is at or below the tolerance plane 3, it is in the contact field of the measuring device 2, and out of tolerance and, on the basis of this information, it is allowed into the non-tolerance container 15 of rod material. If the proximal edge of the rod material 5 being tested is above the tolerance plane, it is outside the contact field of the measuring device 2, and the rod material 5 is evaluated as being within tolerance and, on the basis of this information, is released into the tolerance container 14 of rod material.

During control, the rod material 5 being checked is moved manually from the container 16 into the control position 17. By of the operator pressing the left and right hand buttons at the same time, the rod material 5 is released by means of the safety mechanism 18 and dropped onto the measuring grid 1 where it is self propelled across the measuring area 11 of the line sensors 4. These sensors are located along the rolling direction of the rod material 5 in a plane parallel to the plane of the measuring grid, where the distance of the two planes can be adjusted by the drive means 9, which is eccentric. The set distance then corresponds to the maximum allowable tolerance. The linear sensors 4 are connected in series and test the "unlocking" state that occurs when the corrugation of the rod material 5 exceeds the permitted limit by the eccentric distance set from the measuring area 11. While, the surface of the controlled rod material 5 is deviated, due to its corrugation, from the line sensor 4 above the permitted distance.

At the beginning of the run track of the measuring area 11, the starting position sensor 10 is located, and the end sensor 10 is located at the end of the run track. If during the measuring interval "start" - "stop" leads to an unlocking of the serially connected inductive line of sensors 4, then the system opens the sorting means 13, the rod material 5 falls into the container 15 of non-tolerance rod material 5.

If the inductively coupled line sensors 4 is not unlocked, the rod material 5 is directed to the tolerance container 14 of rod material 5.

### Example 2

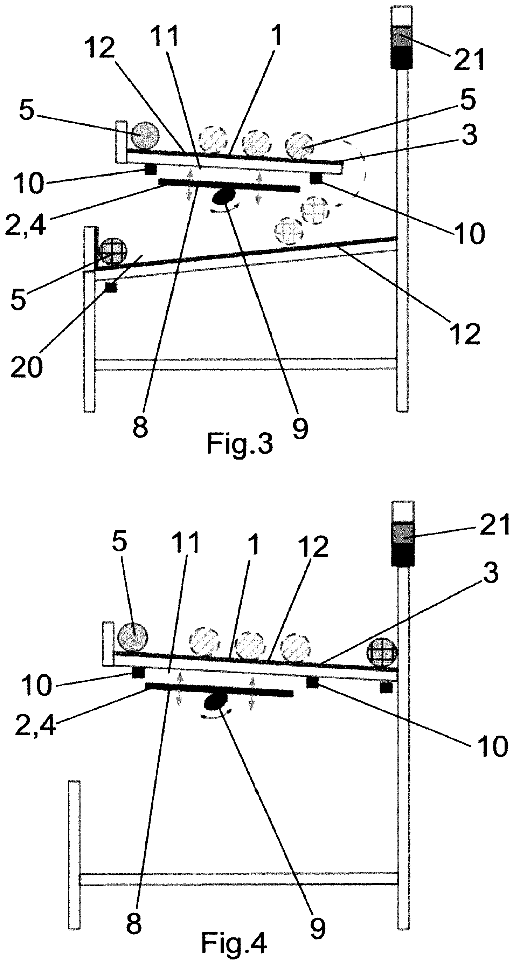

A device for checking the accuracy of semifinished rod materials (Fig. 3) is made to be stable.

The device allows for control of the flatness and/or pitch and/or the straightness and/or the cylindricalness and/or the cohesiveness of rod materials, in particular rod materials in round form and/or profiles and/or tubes with a circular cross-section or a cross-section having a nearly circular cross-section such as multiple angle profiles.

The device comprises a measuring grid 1 and a range of measuring devices 2 to form a tolerance plane 3.

By means of measuring devices 2 to form a tolerance plane 3, there is a range of line sensors 4 (Fig. 5) arranged longitudinally in the direction of movement of the rod material 5 along the measuring grid 1.

The measuring device 2 for checking electrically conductive materials is an inductive sensor.

The measuring device 2 for checking electrically nonconductive materials is an electrostatic transducer or an electromagnetic transducer.

The device further comprises two sensors 10 for demarcation of the measuring area 11.

The measuring devices 2 for forming tolerance planes 3 are arranged on a fixed height-adjustable carrier 8 which is connected to the drive means 9, which is eccentric.

The measuring grid 1 is arranged as inclined with respect to the horizontal plane.

The measuring grid 1 is equipped with gliders 12. The gliders 12 are provided on all grids upon which the measured rod material 5 moves.

Beyond the measuring grid 1 there is additionally located a container 20 of rod material 5.

The device further includes a signalling means 21 on which a green light switches on when the rod material 5 is within tolerance. If it is not within the tolerance, a red light switches on.

The operator initially inserts the rod material 5 to be checked into the beginning of the measuring grid 1 and lets the rod material 5 to pass across the measuring area 11. Subsequently, the checked rod material 5 which stops in the container 20 of rod material 5 is removed by the operator and moved, based on the result of the check, either on to processing or is discarded.

### Example 3

A device for checking the accuracy of semifinished rod materials (Fig. 4) is once again made to be stable.

The device comprises a measuring grid 1 and a range of measuring devices 2 to form a tolerance plane 3.

By means of measuring devices 2 to form a tolerance plane 3, there is a range of line sensors 4 (Fig. 5) arranged longitudinally in the direction of movement of the rod material 5 along the measuring grid 1.

The measuring device 2 for checking electrically conductive materials is an inductive sensor.

The measuring device 2 for checking electrically nonconductive materials is an electrostatic transducer or an electromagnetic transducer.

The device further comprises two sensors 10 for demarcation of the measuring area 11.

The measuring devices 2 for forming tolerance planes 3 are arranged on a fixed height-adjustable carrier 8 which is connected to the drive means 9, which is eccentric.

The measuring grid 1 is arranged as inclined with respect to the horizontal plane.

The measuring grid 1 is equipped with gliders 12.

The device further includes a signalling means 21 on which a green light switches on when the rod material 5 is within tolerance. If it is not within the tolerance, a red light switches on.

The operator first places the rod material 5 to be checked onto the beginning of the measuring grid 1 and lets the rod material 5 pass through the measuring area 11. Subsequently, the checked rod which stops at the end of the measuring grid 1 is removed by the operator and moved, based on the result of the check, either on to processing or is discarded.

### Industrial Application

A device for checking the accuracy of rod materials, according to the invention, specifically to be used for checking the accuracy of semifinished rod materials, specifically to check the flatness and/or pitch and/or the straightness and/or the cylindricalness and/or the cohesiveness of rod materials.

## Claims

1. A device for checking the accuracy of rod materials, in particular a device for checking the accuracy of half-finished rod products, especially for checking the flatness and/or pitch and/or straightness and/or cylindricalness of the rod materials in round form and/or profiles and/or tubes with a circular cross-section or a cross-section having a nearly circular cross-section such as multiple angle profiles **characterised by that** it comprises a measuring grid (1) and at least one measuring device (2) for forming tolerance planes (3).

2. The device for checking the accuracy of rod materials according to claim 1, **characterised by that** in that the measuring device (2) for forming a tolerance plane (3) is at least one linear sensor (4) arranged longitudinally in the direction of movement of the rod material (5) along the measuring grid (1).

3. The device for checking the accuracy of rod materials according to claim 1, **characterised by that** in that the measuring device (2) for forming a tolerance plane (3) there is at least one linear sensor (4) arranged obliquely to the direction of movement of the rod material (5) along the measuring grid (1).

4. The device for checking the accuracy of rod materials according to claim 1, **characterised by that** in that the measuring device (2) for forming a tolerance plane (3) there are at least three point sensors (6) arranged in at least one line (7) parallel to the measuring grid (1).

5. The device for checking the accuracy of rod materials according to claim 4, **characterised by that** in that the measuring device (2) for forming a tolerance plane (3) there are at least four point sensors (6) arranged in at least two lines (7) parallel to the measuring grid (1), said lines (7) being parallel to each other longitudinally in the direction of movement of the rod material (5) along the measuring grid (1).

6. The device for checking the accuracy of rod materials according to any one of the preceding claims, **characterised by that** in that the measuring device (2) is an inductive sensor.

7. The device for checking the accuracy of rod materials according to any of the claims 1 to 5, **characterised by that** in that the measuring device (2) is an electrostatic transducer or an electromagnetic sensor.

8. The device for checking the accuracy of rod materials according to any one of the preceding claims, **characterised by that** in that at least one measuring device (2) for forming the tolerance plane (3) is arranged on a height-adjustable carrier (8).

9. The device for checking the accuracy of rod materials according to claim 8, **characterised by that** that the height-adjustable carrier (8) is connected to a drive means (9).

10. The device for checking the accuracy of rod materials according to any one of the preceding claims **characterised by that** the measuring grid (1) is arranged to be inclined with respect to the horizontal plane.

11. The device for checking the accuracy of rod materials according to any one of claims 1 to 9, **characterised by that** in that it further comprises means for transporting the rod material (5) along the measuring grid (1).

12. The device for checking the accuracy of rod materials according to any one of the preceding claims, further comprising at least two sensors (10) for demarcation of the measuring area (11)

13. The device for checking the accuracy of rod materials according to any one of the preceding claims **characterised by that** in that the measuring grid (1) is equipped with gliders (12).

14. The device for checking the accuracy of rod materials according to any one of the preceding claims, **characterised by that** furthermore, beyond the measuring grid (1) a sorting means (13) is arranged into whose container (14) within tolerance rod materials (5) fall and the non-tolerance container (15) for rod materials (5).
